# EUROPEAN PATENT APPLICATION

(11) **EP 3 819 826 A1**
(43) Date of publication of application: **12.05.2021**
(21) Application number: 19218213.7
(22) Date of filing: 19.12.2019
(51) Int. Cl.: G06K 19/07

(54) **SINGLE DEVICE EMULATING DIFFERENT IDENTIFICATION DEVICES**

(30) Priority: 06.11.2019 TW 108140234
(71) Applicant: YesGo Tech Corporation, New Taipei City 221 (TW)
(72) Inventor: Chun-Ru, Huang, Taipei City 106 (TW); Chen-Chan, Lin, Taipei City 115 (TW); Tan-Wei, Chou, Taipei City 115 (TW)
(74) Representative: 2K Patentanwälte Blasberg Kewitz & Reichel

(57) **Abstract**

An identification device and an identification setting system are provided. The identification setting system includes the identification device and a reader. The identification device switches a plurality of receiving frequencies to receive at least one of a plurality of setting data. The identification device performs a plurality of setting operations according to the plurality of setting data to obtain a plurality of pieces of identification information, and performs a plurality of different sensing identification operations according to the plurality of pieces of identification information.

## Description

### BACKGROUND OF THE INVENTION

### Field of the Invention

The disclosure relates to an identification device and an identification setting system, and in particular, to an identification device capable of performing a plurality of sets of sensing identification operations with a same frequency or different frequencies and with a same carrier or different carriers, and an identification setting system.

### Description of Related Art

An existing identification device such as a sensing access card or an electronic wallet (such as an Easy card and an all-in-one card) performs a single sensing identification operation using a single piece of identification information. When a user has a plurality of different frequency sensing access cards or electronic wallets, the user needs to carry a plurality of different frequency sensing access cards or electronic wallets at the same time and memorize occasions in which each sensing access card or electronic wallet is used. Therefore, how to implement an identification device that performs a plurality of different frequency sensing identification operations is one of the development focuses of the identification device.

### SUMMARY OF THE INVENTION

The invention provides an identification device capable of performing a plurality of sets of sensing identification operations with a same frequency or different frequencies and with a same carrier or different carriers, and an identification setting system.

The identification device of the invention includes an antenna array, a micro power unit, and a wireless transceiver module. The antenna array is configured to switch a plurality of receiving frequencies to receive at least one of a plurality of setting data corresponding to at least one carrier frequency. The micro power unit is configured to receive one of the setting data and provide an operating power corresponding to the one of the setting data. The wireless transceiver module is coupled to the antenna array and the micro power unit. The wireless transceiver module is driven by the operating power. The wireless transceiver module performs a plurality of setting operations according to the plurality of setting data to obtain a plurality of pieces of identification information, and performs a plurality of different sensing identification operations according to the plurality of pieces of identification information.

The identification setting system of the invention includes the foregoing identification device and a reader. The reader is configured to receive a plurality of pieces of write information via a wireless communication, and provide at least one of the plurality of setting data corresponding to the at least one carrier frequency and the write information via the wireless communication.

Based on the above, the identification setting system of the invention is capable of receiving a plurality of pieces of original identification information of the identification device, and providing a plurality of setting data corresponding to the carrier frequency via the wireless communication. The identification device performs a setting operation according to the plurality of setting data to set the plurality of pieces of original identification information as the plurality of pieces of identification information. In this way, the identification device can automatically perform a plurality of different sensing identification operations in a passive state.

To make the features and advantages of the invention clear and easy to understand, the following gives a detailed description of embodiments with reference to accompanying drawings.

### BRIEF DESCRIPTION OF THE DRAWINGS

FIG. 1 is a schematic diagram of an identification setting system according to an embodiment of the invention.
FIG. 2 is a schematic diagram of an identification device according to an embodiment of the invention.
FIG. 3 is a schematic diagram of an identification device according to another embodiment of the invention.
FIG. 4 is a schematic diagram of an identification device according to yet another embodiment of the invention.

### DESCRIPTION OF THE EMBODIMENTS

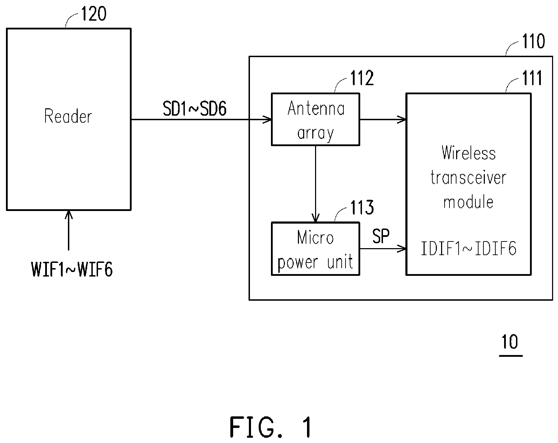

Referring to FIG. 1, FIG. 1 is a schematic diagram of an identification setting system according to an embodiment of the invention. In the present embodiment, an identification setting system 10 includes an identification device 110 and a reader 120. The reader 120 receives write information WIF1-WIF6 via a wireless communication. In the present embodiment, the write information WIF1-WIF6 may be obtained by current six different original identification devices (not shown). In the present embodiment, the reader 120 performs a scanning operation on the six original identification devices via a wireless communication to receive the write information WIF1-WIF6 from the six original identification devices, and provides at least one of the setting data SD1-SD6 corresponding to a carrier frequency and the write information WIF1-WIF6. In the present embodiment, the reader 120 may be in proximity to a first original identification device of a plurality of original identification devices to receive write information WIF1 corresponding to the first original identification device, and provide setting data SD1 corresponding to the carrier frequency and the write information WIF1. The reader 120 may be in proximity to a second original identification device of the plurality of original identification devices to receive write information WIF2 corresponding to the second original identification device, and provide setting data SD2 corresponding to the carrier frequency and the write information WIF2, and so on. In some embodiments, the reader 120 further includes a memory unit (not shown) for storing the write information WIF1-WIF6 and the setting data SD1-SD6. In the present embodiment, the six original identification devices are, for example, sensing identification devices for sensing access cards or electronic wallets. A quantity of write information and a quantity of setting data in the present embodiment are each six as an example. There is a plurality of pieces of write information and a plurality of setting data in the invention, which is not limited to the present embodiment.

In the present embodiment, the reader 120 receives at least one of the write information WIF1-WIF6 from the six original identification devices via radio frequency identification (RFID). For example, the reader 120 receives write information WIF1-WIF4 via near-field communication (NFC) in the radio frequency identification, and receives write information WIF5 and WIF6 via low-power RF communication in the radio frequency identification. An RF communication module may be, for example, a Bluetooth low energy (BLE) module.

The reader 120 performs a scanning operation with a preset frequency range via near-field communication. For example, the preset frequency range is, for example, 125 kilohertz (kHz) to 2.4 gigahertz (GHz). Therefore, the reader 120 performs, for example, a scanning operation of 125 kHz to 2.4 GHz to receive the write information WIF1 to WIF4. Because the reader 120 can learn that the write information WIF1-WIF4 may be obtained via near-field communication, the write information WIF5, WIF6 may be obtained via low-power RF communication (the invention is not limited thereto). The reader 120 provides at least one of the setting data SD1-SD4 corresponding to a plurality of carrier frequencies in the preset frequency range (125 kHz to 2.4 GHz) via near-field communication, and provides, for example, the setting data SD5-SD6 of a carrier frequency of 2.4 GHz via low-power RF communication. In the present embodiment, carrier frequencies of the setting data SD1-SD4 may be the same or different. In addition, the reader 120 may learn a plurality of transmission rates (for example, RF/8, RF/10, RF/32, RF/64, RF/128, ..., etc.) required for the plurality of original identification devices to perform a sensing identification operation. Setting data SD1-SD6 may include the plurality of transmission rates required for the original identification device to perform the sensing identification operation.

In addition, in the present embodiment, the reader 120 modulates at least one of the setting data SD1-SD6 (for example, setting data SD1-SD4) via at least one of amplitude shift keying (ASK) processing, frequency shift keying (FSK) processing, and Manchester shift keying processing. For example, after the reader 120 may receive the write information WIF1 via the near-field communication in the radio frequency identification, the reader 120 learns, via the write information WIF1, that the original identification device can perform the sensing identification operation via the carrier frequency of 125 kHz (or 13.5 MHz, but the invention is not limited thereto) and a communication protocol of the amplitude shift keying processing. Therefore, the reader 120 may perform amplitude shift keying processing on the setting data, thereby generating the setting data SD1 having a carrier frequency of 125 kHz (or 13.5 MHz, but the invention is not limited thereto). Therefore, the reader 120 is adapted to receive the write information WIF1-WIF6 via at least one of the amplitude shift keying processing, the frequency shift keying processing, and the Manchester shift keying processing within a preset frequency range, and correspondingly provide the setting data SD1-SD6.

In some embodiments, once the original identification device is in close proximity to the reader 120, the reader 120 automatically receives the write information WIF1-WIF6 from the original identification device, and provides the setting data SD1-SD6 for the identification device 110.

In the present embodiment, in addition to the wireless transceiver module 111, the identification device 110 further includes an antenna array 112 and a micro power unit 113. The antenna array 112 is configured to switch a plurality of receiving frequencies to receive at least one of setting data SD1-SD6 corresponding to at least one carrier frequency. The antenna array 112 demodulates at least one of setting data SD1-SD6 via at least one of amplitude shift keying processing, frequency shift keying processing, and Manchester shift keying processing. The micro power unit 113 is configured to receive one of the setting data SD1-SD6 and provide an operating power SP corresponding to one of the setting data SD1-SD6. The wireless transceiver module 111 is coupled to the antenna array 112 and the micro power unit 113. The wireless transceiver module 111 is driven by the operating power SP. The wireless transceiver module 111 performs a plurality of setting operations according to the setting data SD1-SD6 to obtain identification information IDIF1-IDIF6. In other words, the reader 120 writes the write information WIF1-WIF6 to the wireless transceiver module 111, respectively, so that the wireless transceiver module 111 obtains the identification information IDIF1-IDIF6. Therefore, the identification device 110 copies identification information of the foregoing six original identification devices. In this way, the identification device 110 can perform a plurality of different sensing identification operations according to the identification information IDIF1-IDIF6.

For example, the identification device 110 can perform a first sensing identification operation according to the identification information IDIF1, for example, a 13.5 MHz access control operation of a residential community (an identification code of the identification information IDIF1 corresponds to access control of the residential community). The identification device 110 can perform a second sensing identification operation according to the identification information IDIF2, for example, a 125 kHz access control operation of a workplace (an identification code of the identification information IDIF2 corresponds to access control of the workplace). The identification device 110 can perform a third sensing identification operation according to the identification information IDIF3, for example, a storage or deduction operation of an electronic wallet (an identification code of the identification information IDIF3 corresponds to one of a plurality of electronic wallets), and so on. In the present embodiment, the wireless transceiver module 111 performs a plurality of different sensing identification operations via at least one of near-field communication and low-power RF communication in the radio frequency identification. The foregoing plurality of different sensing identification operations are performed based on different sensing identification codes. The plurality of carrier frequencies of the plurality of sensing identification operations may be different or at least partially identical. A plurality of transmission rates of the plurality of sensing identification operations may be different or at least partially identical.

It is worth mentioning herein that, in the present embodiment, a plurality of different sensing identification operations with different frequencies may be performed. For existing identification devices, in order to achieve the technical effect of performing the plurality of different sensing identification operations in the present embodiment, a plurality of existing identification devices is required. The reader 120 of the present embodiment can provide the setting data SD1-SD6 according to the write information WIF1-WIF6 provided by the original identification device. The identification device 110 can obtain the identification information IDIF1-IDIF6 via the setting data SD1-SD6. In this way, the identification device 110 copies functions of six sensing identification operations of the foregoing six original identification devices. The identification device 110 can perform six different sensing identification operations in different use occasions.

In some embodiments, the identification setting system 10 further includes an electronic device (not shown). The electronic device is coupled to the reader 120. The electronic device controls the reader 120 to receive the write information WIF1-WIF6 and provide setting data SD1-SD6. In other words, a user may control, via the electronic device, the reader 120 to receive the write information WIF1-WIF6 and provide setting data SD1-SD6. In the present embodiment, the electronic device may be, for example, one of a smart phone, a desktop computer, a notebook computer, and a tablet computer. The electronic device has an application program for controlling the reader 120. The user may operate the application program to control the reader 120 to perform a setting operation on the identification device 110.

In the present embodiment, the identification setting system 10 is capable of providing an encryption setting associated with the setting operation to ensure security of the setting operation. For example, there is a first encryption setting associated with the setting operation between the reader 120 and the identification device 110. There is a second encryption setting associated with the setting operation between the electronic device and the reader 120. There is a third encryption setting associated with the setting operation between the electronic device and the user. The foregoing first encryption setting, the second encryption setting, and the third encryption setting may be implemented by, for example, password setting or using a binding device code, and the invention is not limited to the manner of encryption setting. For further example, the second encryption setting between the electronic device and the reader 120 may be authenticated and managed using a unique code of the electronic device. The identification setting system of the invention may have at least one of the first encryption setting, the second encryption setting, and the third encryption setting, and is not limited to the present embodiment.

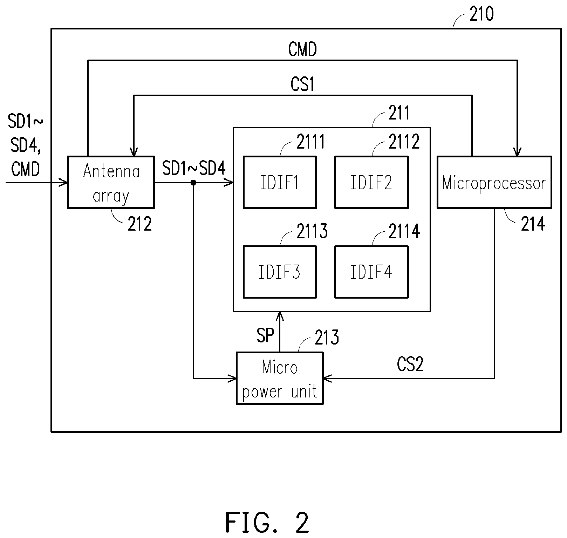

Referring to FIG. 2, FIG. 2 is a schematic diagram of an identification device according to an embodiment of the invention. In the present embodiment, an identification device 210 may be applicable to the identification setting system 10 of FIG. 1. In the present embodiment, a wireless transceiver module 211 of the identification device 210 includes sensing identification units 2111-2114. The sensing identification units 2111-2114 perform four different sensing identification operations via near-field communication in a radio frequency identification.

In the present embodiment, the identification device 210 further includes a microprocessor 214. The microprocessor 214 is coupled to an antenna array 212 and a micro power unit 213. The microprocessor 214 receives command information CMD via the antenna array 212. The command information CMD is provided by a reader (such as the reader 120 shown in FIG. 1). The microprocessor 214 instructs, according the command information CMD, the antenna array 212 to switch one of a plurality of receiving frequencies to receive one of the setting data SD1-SD4. The microprocessor 214 further instructs, according to the command information CMD, the micro power unit 213 to provide an operating power SP corresponding to one of the setting data SD1-SD4. In the present embodiment, the micro power unit 213 may provide a driving power (not shown) for the microprocessor 214 according to the command information CMD. The microprocessor 214 is driven by the driving power provided by the micro power unit 213. The identification device can automatically perform a plurality of different sensing identification operations in a passive state.

For example, in the present embodiment, when the antenna array 212 receives the command information CMD, the micro power unit 213 provides the driving power for the microprocessor 214 according to the command information CMD, to drive the microprocessor 214. The microprocessor 214 receives the command information CMD via the antenna array 212. The microprocessor 214 provides a control signal CS1 according to the command information CMD to instruct the antenna array 212 to switch to a first receiving frequency of a plurality of receiving frequencies to receive setting data SD1. The microprocessor 214 also provides a control signal CS2 according to the command information CMD to instruct the micro power unit 213 to provide the operating power SP corresponding to the setting data SD1. Therefore, the sensing identification unit 2111 is driven in accordance with the operating power SP corresponding to the setting data SD1, and performs a setting operation (for example, a burning operation) in accordance with the setting data SD1 to obtain identification information IDIF1. In other words, the sensing identification unit 2111 is written into the identification information IDIF1. The sensing identification unit 2111 performs a first sensing identification operation according to the identification information IDIF1. For another example, the microprocessor 214 receives the command information CMD via the antenna array 212, and provides a control signal CS1 according the command information CMD to instruct the antenna array 212 to switch a second receiving frequency of a plurality of receiving frequencies to receive setting data SD2. The microprocessor 214 also provides a control signal CS2 according to the command information CMD to instruct the micro power unit 213 to provide the operating power SP corresponding to the setting data SD2. The sensing identification unit 2112 is driven in accordance with the operating power SP corresponding to the setting data SD2, and performs a setting operation (for example, a burning operation) in accordance with the setting data SD2 to obtain identification information IDIF2. In other words, the sensing identification unit 2112 is written into the identification information IDIF2. The sensing identification unit 2112 performs a second sensing identification operation according to the identification information IDIF2.

It should be noted that the microprocessor 214 has a built-in policy corresponding to the setting operation (for example, a burning operation) of the command information CMD Therefore, the electronic device other than the identification device 210 cannot copy the policy of the setting operation of the microprocessor 214. An external electronic device cannot copy (or pirate) a plurality of sensing identification operations of the identification device 210, thereby increasing identification security of the identification device 210.

For ease of carrying, a volume of the identification device 210 is limited. Therefore, the wireless transceiver module 211, the micro power unit 213, and the antenna array 212 are implemented via a miniaturization technology of an integrated circuit. After the wireless transceiver module 211, the micro power unit 213, and the antenna array 212 are miniaturized, the wireless transceiver module 211, the micro power unit 213, and the antenna array 212 probably operate abnormally due to signal interference generated by the operating power SP or the setting data SD1-SD4. Therefore, in an embodiment, the identification device 210 further includes a first coupler, a second coupler, and a third coupler (not shown). The first coupler is coupled between the antenna array 212 and the wireless transceiver module 211. The first coupler prevents signal interference between the antenna array 212 and the wireless transceiver module 211. The second coupler is coupled between the antenna array 212 and the micro power unit 213. The second coupler prevents signal interference between the antenna array 212 and the micro power unit 213. The third coupler is coupled between the wireless transceiver module 211 and the micro power unit 213. The third coupler prevents signal interference between the wireless transceiver module 211 and the micro power unit 213. In the present embodiment, the first coupler, the second coupler, and the third coupler are capable of isolating, for example, interference of alternating current signals generated by the operating power SP or the setting data SD1-SD4. In some embodiments, the identification device 210 includes at least one of a first coupler, a second coupler, and a third coupler. The invention is not limited to the foregoing embodiments.

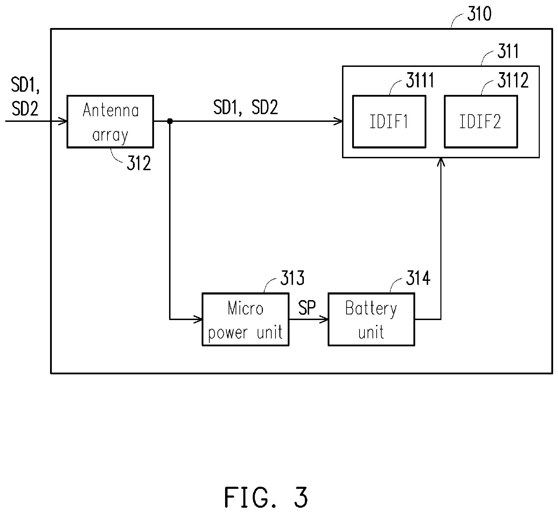

Referring to FIG. 3, FIG. 3 is a schematic diagram of an identification device according to another embodiment of the invention. In the present embodiment, an identification device 310 may be applicable to the identification setting system 10 of FIG. 1. In the present embodiment, a wireless transceiver module 311 of the identification device 310 includes sensing identification units 3111 and 3112. For example, the sensing identification unit 3111 stores identification information IDIF1. The sensing identification unit 3112 stores identification information IDIF2. In the present embodiment, the wireless transceiver module 311 performs a plurality of different sensing identification operations via low-power RF communication. In other words, the sensing identification units 3111 and 3112 perform two different sensing identification operations via the low-power RF communication (for example, Bluetooth low energy). In the present embodiment, a micro power unit 313 provides an operating power SP corresponding to setting data SD1, SD2 via an antenna array 312. For example, the micro power unit 313 provides same operating power SP corresponding to setting data SD1, SD2.

In the present embodiment, the identification device 310 further includes a battery unit 314. The battery unit 314 is coupled to the micro power unit 313. The battery unit 314 stores the operating power SP provided by the micro power unit 313. The wireless transceiver module 311 is driven by the power stored in the battery unit 314. The sensing identification unit 3111 of the wireless transceiver module 311 performs a setting operation according to the setting data SD1 to obtain identification information IDIF1. The sensing identification unit 3111 performs a first sensing identification operation according to the identification information IDIF1. The sensing identification unit 3112 of the wireless transceiver module 311 further performs a setting operation according to the setting data SD2 to obtain identification information IDIF2. The sensing identification unit 3112 performs a second sensing identification operation according to the identification information IDIF2. In the present embodiment, when the power stored in the battery unit 314 is sufficient, the wireless transceiver module 311 may receive the setting data SD1, SD2 via the low-power RF communication. Therefore, the wireless transceiver module 311 has two different ways for receiving the setting data SD1, SD2.

In the present embodiment, the wireless transceiver module 311 may further perform a seeking operation via the power stored in the battery unit 314 and a low-power RF communication. For example, when the power stored in the battery unit 314 is sufficient, the sensing identification unit 3111 performs low-power Bluetooth communication with low-power RF communication with a to-be-tracked target device (such as a smart phone). The sensing identification unit 3111 may determine, via the low-power Bluetooth communication, whether the target device is away from the identification device 310. When the sensing identification unit 3111 determines that the target device leaves a sensing range (for example, a radius of 30 or 100 meters) of the sensing identification unit 3111, the identification device 310 generates a first warning signal to notify a user of the identification device 310. The user holds the identification device 310 to start moving and search for the target device. When the sensing identification unit 3111 determines that the target device returns to the sensing range of the sensing identification unit 3111, the identification device 310 stops generating the first warning signal or generates a second warning signal different from the first warning signal to notify the user. In this way, the user may learn a result of seeking according to a change of the warning signal. In some embodiments, the target device may be a device that includes a similar design to the identification device 310. Therefore, the user holding the target device may perform the seeking operation via the target device to seek the identification device 310. In addition, the target device may further perform a two-way seeking operation with the identification device 310 via the low-power RF communication. In other words, when a first user holding the target device performs the seeking operation via the target device to seek the identification device 310, a second user holding the identification device 310 may also perform the seeking operation to seek the target device.

In some embodiments, the target device may further perform a seeking operation via the Global Positioning System (GPS) of the RF communication to seek the identification device 310.

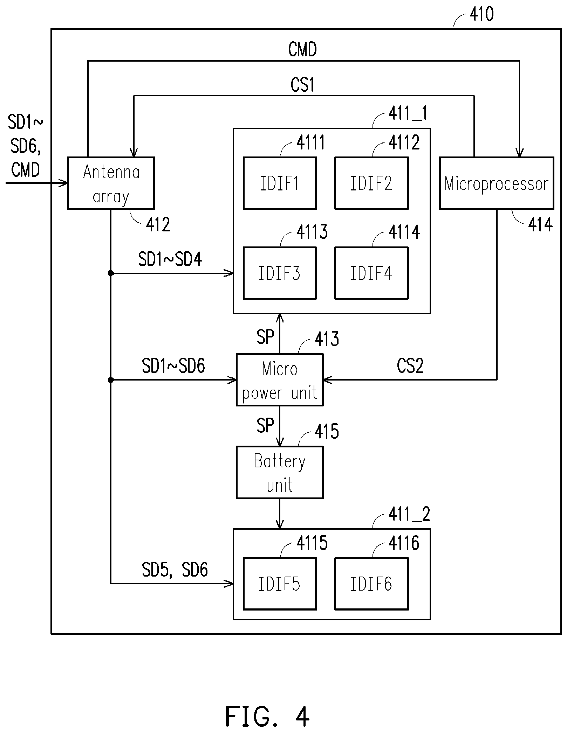

Referring to FIG. 4, FIG. 4 is a schematic diagram of an identification device according to yet another embodiment of the invention. In the present embodiment, an identification device 410 includes wireless transceiver modules 411_1, 411_2, an antenna array 412, a micro power unit 413, a microprocessor 414, and a battery unit 415. In the present embodiment, the wireless transceiver module 411_1 includes sensing identification units 4111-4114. The sensing identification units 4111-4114 respectively perform four different sensing identification operations via near-field communication. The wireless transceiver module 411_2 includes sensing identification units 4115 and 4116. The sensing identification units 4115 and 4116 respectively perform different sensing identification operations via Bluetooth low energy. In the present embodiment, for cooperative operations between the wireless transceiver module 411_1, the antenna array 412, the micro power unit 413, and the microprocessor 414, sufficient reference may be made to the embodiment of FIG. 2, and therefore the descriptions thereof are omitted herein. In addition, in the present embodiment, for cooperative operations between the wireless transceiver module 411_2, the antenna array 412, the micro power unit 413, and the microprocessor 415, sufficient reference may be made to the embodiment of FIG. 3, and therefore the descriptions thereof are omitted herein.

In comparison to the embodiment of FIG. 2, the identification device 410 of the present embodiment is also capable of performing a seeking operation via the wireless transceiver module 411_2 and the battery unit 415. For implementation details of the seeking operation of the present embodiment, sufficient reference may be made to the embodiment of FIG. 3, and therefore the descriptions thereof are omitted herein.

Based on the above, the identification setting system of the invention is capable of receiving a plurality of pieces of write information of the identification device, and providing a plurality of setting data corresponding to the carrier frequency via the wireless communication. The identification device performs a setting operation according to the plurality of setting data to set the plurality of pieces of write information as the plurality of pieces of identification information. In this way, the identification device can perform a plurality of different sensing identification operations. In addition to this, the identification device with the battery unit can also perform a one-way or two-way seeking operation with the target device via low-power RF communication.

## Claims

1. An identification device (110, 210, 310, 410), comprising:
an antenna array (112, 212, 312, 412) configured to switch a plurality of receiving frequencies to receive at least one of a plurality of setting data (SD1-SD6) corresponding to at least one carrier frequency;
a micro power unit (113, 213, 313, 413) configured to receive one of the setting data (SD1-SD6) and provide an operating power (SP) corresponding to the one of the setting data (SD1-SD6); and
a wireless transceiver module (111, 211, 311, 411_1, 411_2) coupled to the antenna array (112, 212, 312, 412) and the micro power unit (113, 213, 313, 413) and driven by the operating power (SP), performing a plurality of setting operations according to the setting data (SD1-SD6) to obtain a plurality of pieces of identification information (IDIF1-IDIF6), and performing a plurality of different sensing identification operations according to the identification information (IDIF1-IDIF6).

2. The identification device (110, 210, 310, 410) according to claim 1, wherein the wireless transceiver module (111, 211, 311, 411_1, 411_2) comprises:
a plurality of sensing identification units (2111-2114, 3111, 3112, 4111-4116) each storing one of the pieces of identification information (IDIF1-IDIF6), wherein
a first sensing identification unit of the sensing identification units (2111-2114, 3111, 3112, 4111-4116) performs a first setting operation of the setting operations according to a first setting data of the setting data (SD1-SD6) to obtain first identification information of the identification information (IDIF1-IDIF6), and performs a first sensing identification operation of the sensing identification operations according to the first identification information.

3. The identification device (110, 210, 310, 410) according to claim 2, wherein the identification device (110, 210, 310, 410) further comprises:
a microprocessor (214, 414) coupled to the antenna array (112, 212, 312, 412) and the micro power unit (113, 213, 313, 413) and configured to:
be driven by a driving power provided by the micro power unit (113, 213, 313, 413),
receive command information (CMD) via the antenna array (112, 212, 312, 412),
instruct, according to the command information (CMD), the antenna array (112, 212, 312, 412) to switch to one of the receiving frequencies to receive one of the setting data (SD1-SD6), and
instruct, according to the command information (CMD), the micro power unit (113, 213, 313, 413) to provide the operating power (SP) corresponding to the one of the setting data (SD1-SD6).

4. The identification device (110, 210, 310, 410) according to claim 2 to 3, wherein the identification device (110, 210, 310, 410) further comprises:
a first coupler coupled between the antenna array (112, 212, 312, 412) and the wireless transceiver module (111, 211, 311, 411_1, 411_2) to prevent signal interference between the antenna array (112, 212, 312, 412) and the wireless transceiver module (111, 211, 311, 411_1, 411_2);
a second coupler coupled between the antenna array (112, 212, 312, 412) and the micro power unit (113, 213, 313, 413) to prevent signal interference between the antenna array (112, 212, 312, 412) and the micro power unit (113, 213, 313, 413); and
a third coupler coupled between the wireless transceiver module (111, 211, 311, 411_1, 411_2) and the micro power unit (113, 213, 313, 413) to prevent signal interference between the wireless transceiver module (111, 211, 311, 411_1, 411_2) and the micro power unit (113, 213, 313, 413).

5. The identification device (110, 210, 310, 410) according to any of the claims 1 to 4, wherein the antenna array (112, 212, 312, 412) demodulates at least one of the setting data (SD1-SD6) via one of amplitude shift keying processing, frequency shift keying processing, and Manchester shift keying processing.

6. The identification device (110, 210, 310, 410) according to any of the claims 1 to 5, wherein the wireless transceiver module (111, 211, 311, 411_1, 411 2) performs at least one of the different sensing identification operations via radio frequency identification.

7. The identification device (110, 210, 310, 410) according to any of the claims 1 to 6, wherein the identification device (110, 210, 310, 410) further comprises:
a battery unit (314, 415) coupled to the wireless transceiver module (111, 211, 311, 411_1, 411_2) and the micro power unit (113, 213, 313, 413) and configured to store the operating power (SP) provided by the micro power unit (113, 213, 313, 413).

8. The identification device (110, 210, 310, 410) according to claim 7, wherein the wireless transceiver module (111, 211, 311, 411_1, 411_2) is further configured to perform a seeking operation via power stored in the battery unit (314, 415) and low-power radio frequency communication.

9. An identification setting system, comprising:
the identification device (110, 210, 310, 410) according to claim 1; and
a reader (120) configured to:
receive a plurality of pieces of write information (WIF1-WIF6) via a wireless communication, and
provide at least one of the setting data (SD1-SD6) corresponding to the at least one carrier frequency and the write information (WIF1-WIF6) via the wireless communication.

10. The identification setting system according to claim 9, wherein the reader (120) performs a scanning operation with a preset frequency range on the identification device (110, 210, 310, 410) via near-field communication to receive the write information (WIF1-WIF6) wherein preferably the preset frequency range can be from 125 kHz to 2.4 GHz.

11. The identification setting system according to claim 9 or 10, wherein the reader (120) modulates at least one of the setting data (SD1-SD6) via one of amplitude shift keying processing, frequency shift keying processing, and Manchester shift keying processing.

12. The identification setting system according to any of the claims 9 to 11, wherein the reader (120) receives the write information (WIF1-WIF6) of the wireless transceiver module (111, 211, 311, 411_1, 411_2) of the identification device (110, 210, 310, 410) via radio frequency identification.

13. The identification setting system according to any of the claims 9 to 12, wherein there is a first encryption setting associated with the setting operations between the reader (120) and the identification device (110, 210, 310, 410).

14. The identification setting system according to claim 13, further comprising:
an electronic device coupled to the reader (120) and configured to control the reader (120) to receive the write information (WIF1-WIF6) and provide the setting data (SD1-SD6).

15. The identification setting system according to claim 14, wherein there is a second encryption setting associated with the setting operations between the electronic device and the reader (120) and preferably there can a third encryption setting associated with the setting operations between the electronic device and a user.

## Amended claims

### Amended claims in accordance with Rule 137(2) EPC.

1. An identification device (110, 210, 310, 410), comprising:
an antenna array (112, 212, 312, 412) configured to switch a plurality of receiving frequencies to receive at least one of a plurality of setting data (SD1-SD6) providable by a reader (120) external to the identification device (110, 210, 310, 410), wherein the plurality of setting data (SD1-SD6) correspond to at least one carrier frequency and wherein the plurality of setting data (SD1-SD6) correspond to a plurality of pieces of write information (WIF1-WIF6) from a plurality of original identification device different from the identification device (110, 210, 310, 410);
a micro power unit (113, 213, 313, 413) configured to receive one of the plurality of setting data (SD1-SD6) and provide an operating power (SP) corresponding to the one of the plurality of setting data (SD1-SD6); and
a wireless transceiver module (111, 211, 311, 411_1, 411_2) coupled to the antenna array (112, 212, 312, 412) and the micro power unit (113, 213, 313, 413) and driven by the operating power (SP), performing a plurality of setting operations according to the plurality of setting data (SD1-SD6) to obtain a plurality of pieces of identification information (IDIF1-IDIF6), and performing a plurality of different sensing identification operations according to the plurality of pieces of identification information (IDIF1-IDIF6).

2. The identification device (110, 210, 310, 410) according to claim 1, wherein the wireless transceiver module (111, 211, 311, 411_1, 411_2) comprises:
a plurality of sensing identification units (2111-2114, 3111, 3112, 4111-4116) each storing one of the plurality of pieces of identification information (IDIF1-IDIF6), wherein
a first sensing identification unit of the sensing identification units (2111-2114, 3111, 3112, 4111-4116) performs a first setting operation of the setting operations according to a first setting data of the plurality of setting data (SD1-SD6) to obtain first identification information of the plurality of pieces of identification information (IDIF1-IDIF6), and performs a first sensing identification operation of the sensing identification operations according to the first identification information.

3. The identification device (110, 210, 310, 410) according to claim 2, wherein the identification device (110, 210, 310, 410) further comprises:
a microprocessor (214, 414) coupled to the antenna array (112, 212, 312, 412) and the micro power unit (113, 213, 313, 413) and configured to:
be driven by a driving power provided by the micro power unit (113, 213, 313, 413),
receive command information (CMD) via the antenna array (112, 212, 312, 412), instruct, according to the command information (CMD), the antenna array (112, 212, 312, 412) to switch to one of the receiving frequencies to receive one of the plurality of setting data (SD1-SD6), and
instruct, according to the command information (CMD), the micro power unit (113, 213, 313, 413) to provide the operating power (SP) corresponding to the one of the plurality of setting data (SD1-SD6).

4. The identification device (110, 210, 310, 410) according to claim 2 to 3, wherein the identification device (110, 210, 310, 410) further comprises:
a first coupler coupled between the antenna array (112, 212, 312, 412) and the wireless transceiver module (111, 211, 311, 411_1, 411_2) to prevent signal interference between the antenna array (112, 212, 312, 412) and the wireless transceiver module (111, 211, 311, 411_1, 411_2);
a second coupler coupled between the antenna array (112, 212, 312, 412) and the micro power unit (113, 213, 313, 413) to prevent signal interference between the antenna array (112, 212, 312, 412) and the micro power unit (113, 213, 313, 413); and
a third coupler coupled between the wireless transceiver module (111, 211, 311, 411_1, 411_2) and the micro power unit (113, 213, 313, 413) to prevent signal interference between the wireless transceiver module (111, 211, 311, 411_1, 411_2) and the micro power unit (113, 213, 313, 413).

5. The identification device (110, 210, 310, 410) according to any of the claims 1 to 4, wherein the antenna array (112, 212, 312, 412) demodulates the at least one of the plurality of setting data (SD1-SD6) via one of amplitude shift keying processing, frequency shift keying processing, and Manchester shift keying processing.

6. The identification device (110, 210, 310, 410) according to any of the claims 1 to 5, wherein the wireless transceiver module (111, 211, 311, 411_1, 411 2) performs at least one of the different sensing identification operations via radio frequency identification.

7. The identification device (110, 210, 310, 410) according to any of the claims 1 to 6, wherein the identification device (110, 210, 310, 410) further comprises:
a battery unit (314, 415) coupled to the wireless transceiver module (111, 211, 311, 411_1, 411_2) and the micro power unit (113, 213, 313, 413) and configured to store the operating power (SP) provided by the micro power unit (113, 213, 313, 413).

8. The identification device (110, 210, 310, 410) according to claim 7, wherein the wireless transceiver module (111, 211, 311, 411_1, 411_2) is further configured to perform a seeking operation via power stored in the battery unit (314, 415) and low-power radio frequency communication.

9. An identification setting system, comprising:
the identification device (110, 210, 310, 410) according to claim 1; and
a reader (120) configured to receive the plurality of pieces of write information (WIF1-WIF6) via a wireless communication, and provide the at least one of the plurality of setting data (SD1-SD6) corresponding to the at least one carrier frequency and the plurality of pieces of write information (WIF1-WIF6) from a plurality of original identification device different from the identification device (110, 210, 310, 410) via the wireless communication,

10. The identification setting system according to claim 9, wherein the reader (120) performs a scanning operation with a preset frequency range on the identification device (110, 210, 310, 410) via near-field communication to receive the plurality of pieces of write information (WIF1-WIF6) wherein preferably the preset frequency range can be from 125 kHz to 2.4 GHz.

11. The identification setting system according to claim 9 or 10, wherein the reader (120) modulates the at least one of the plurality of setting data (SD1-SD6) via one of amplitude shift keying processing, frequency shift keying processing, and Manchester shift keying processing.

12. The identification setting system according to any of the claims 9 to 11, wherein the reader (120) receives the plurality of pieces of write information (WIF1-WIF6) of the wireless transceiver module (111, 211, 311, 411_1, 411_2) of the identification device (110, 210, 310, 410) via radio frequency identification.

13. The identification setting system according to any of the claims 9 to 12, wherein there is a first encryption setting associated with the setting operations between the reader (120) and the identification device (110, 210, 310, 410).

14. The identification setting system according to claim 13, further comprising:
an electronic device coupled to the reader (120) and configured to control the reader (120) to receive the plurality of pieces of write information (WIF1-WIF6) and provide the plurality of setting data (SD1-SD6).

15. The identification setting system according to claim 14, wherein there is a second encryption setting associated with the setting operations between the electronic device and the reader (120) and preferably there can a third encryption setting associated with the setting operations between the electronic device and a user.
